# EUROPÄISCHE PATENTSCHRIFT

(11) **EP 3 574 225 B1**
(45) Veröffentlichungstag und Bekanntmachung des Hinweises auf die Patenterteilung: **01.02.2023**
(21) Anmeldenummer: 18707266.5
(22) Anmeldetag: 09.02.2018
(51) Int. Cl.: F16D 3/04, F16D 3/12

(54) **KUPPLUNGSELEMENTE MIT SCHWINGUNGSDÄMPFUNG**
COUPLING ELEMENTS WITH VIBRATION DAMPING
ÉLÉMENTS D'ACCOUPLEMENT AVEC AMORTISSEMENT DES VIBRATIONS

(30) Priorität: 07.03.2017 EP 17159627
(43) Veröffentlichungstag der Anmeldung: 04.12.2019
(73) Patentinhaber: Siemens Aktiengesellschaft, 80333 München (DE)
(72) Erfinder: VOLLMER, Rolf, 36129 Gersfeld (DE); BRAUN, Matthias, 97711 Weichtungen (DE)
(86) Internationale Anmeldenummer: PCT/EP2018/053252
(87) Internationale Veröffentlichungsnummer: WO 2018/162171

(56) Entgegenhaltungen:
- DE-C1- 3 311 115
- JP-A- H06 288 463
- JP-A- 2001 206 221

## Beschreibung

Die Erfindung betrifft eine Kupplung zur Anbindung eines Gebers an eine elektrische Maschine, wobei die Kupplung ein mit einer Geberwelle koppelbares Geberwellenendstück und ein mit einer Maschinenwelle koppelbares Maschinenwellenendstück umfasst und wobei mindestens ein Endstück über wenigstens einen Mitnehmer verfügt. Ferner betrifft die Erfindung ein geeignetes Herstellungsverfahren und die Verwendung einer derartigen Kupplung sowie ein Wellenendstück.

Wird ein Geber mittels eines Kupplungselements mit einer elektrischen Maschine verbunden, so ergibt sich aus der Kupplung und der Massenträgheit des Gebers ein schwingungsfähiges System. Hierdurch können in der Resonanz Schwingungsüberhöhungen auftreten.

Bisher wurden elektrische Maschinen unterhalb der Resonanz betrieben oder es wurden Filter eingesetzt, die die Anregung im Resonanzpunkt verhindern. Der Betrieb unterhalb der Resonanz schränkt jedoch die Dynamik ein, der Betrieb mit Filter die Rechenleistung des Reglers.

Aus der Patentschrift EP2169245B1 ist eine Wellenkupplung und ein Verfahren zur Ankopplung eines Gebers, der eine Geberwelle aufweist, an eine elektrische Maschine, die eine Maschinenwelle aufweist, bekannt, wobei die Wellenkupplung umfasst:
- ein mit der Geberwelle koppelbares Geberwellenendstück,
- ein mit der Maschinenwelle koppelbares Maschinenwellenendstück und
- ein Drehmomentübertragungselement,
wobei zur Kopplung der Geberwelle mit der Maschinenwelle das Geberwellenendstück gegenüberliegend zum Maschinenwellenendstück angeordnet ist und das Drehmomentübertragungselement zwischen dem Geberwellenendstück und dem Maschinenwellenendstück angeordnet ist.

Eine ähnliche Wellenkupplung geht auch aus der Druckschrift DE102006043897A1 hervor.

Die Patentschrift JP 2001206221 A offenbart eine rotierende Unwuchtkomponente in einer Wellenkupplung, die zwischen einem Untersetzungsgetriebe und einem Motor zum Antrieb einer Achse eines Schienenfahrzeugs vorgesehen ist. Hierbei wird granulares Material 85 in zylindrischen Behältern 75, 76 einer Wellenkupplung 70 versiegelt.

Der Erfindung liegt die Aufgabe zugrunde, ein Wellenendstück sowie eine Kupplung, die vorzugsweise wenigstens ein Geberwellenendstück und wenigstens ein Maschinenwellenendstück umfasst, zu schaffen, die eine Dämpfung eingeleiteter Schwingungen und Stöße bewirkt. Weiterhin liegt der Erfindung die Aufgabe zugrunde, ein entsprechendes Wellenendstück zu schaffen.

Die Lösung der gestellten Aufgabe gelingt durch ein Wellenendstück mit den Merkmalen des Anspruchs 1 sowie eine Kupplung mit einem solchen Wellenendstück.

Ferner wird die Aufgabe gelöst durch ein Verfahren zur Herstellung des Wellenendstücks, bei welchem mindestens ein Hohlraum ausgebildet wird, in welchem granulares Material verbleibt oder hinzugefügt wird.

Zudem wird die Aufgabe gelöst durch die Verwendung der Kupplung zur Dämpfung von Schwingungen und Stößen.

Weitere vorteilhafte Ausführungen ergeben sich aus den Unteransprüchen.

Die Erfindung bietet den Vorteil, dass das in den Hohlräumen der Wellenendstücke befindliche granulare Material Stöße und Schwingungen dämpft. Besonders in der Resonanz treten Schwingungsüberhöhungen, die durch das schwingungsfähige System aus Kupplung und Massenträgheit des Gebers verursacht werden, auf und können so gedämpft werden. Dies bedeutet eine Dämpfung der Übertragungsfunktion im Resonanzpunkt, wodurch die elektrische Maschine in einem erweiterten Frequenzbereich betrieben und auf elektronische Filtermaßnahmen verzichtet werden kann.

Das Drehmomentübertragungselement wird zwischen dem Geber- und Maschinenwellenendstück eingefügt. Dieses bewirkt eine Verminderung der Reibung und wird vorzugsweise als Kunststoffbauteil ausgeführt.

Um eine Unwucht zu vermeiden, verfügt jedes Endstück über vorzugsweise zwei Mitnehmer. Jeder Mitnehmer verfügt über vorzugsweise genau einen vollständig umschlossenen Hohlraum, der vorzugsweise vollständig mit granularem Material gefüllt ist. Die Größe des Hohlraums definiert sich aus der Anwendung, da die Steifigkeit des Endstücks mit steigender Größe des Hohlraums abnimmt. Das Geber- oder Maschinenwellenendstück muss jedoch den anwendungsspezifischen Anforderungen standhalten.

Unter anderem aufgrund seiner Festigkeit und Belastbarkeit eignet sich Stahl besonders gut als Material für die Endstücke bzw. Stahl-Pulver als granulares Material zur Füllung der Hohlräume in den Mitnehmern.

Als Verfahren zur Herstellung eines Wellenendstücks, vorzugsweise als Endstück einer Geber- oder Maschinenwelle ausgeführt, bei welchem mindestens ein vollständig umschlossener Hohlraum ausgebildet wird, in welchem granulares Material verbleibt oder hinzugefügt wird, eignet sich insbesondere ein additives Fertigungsverfahren, vorzugsweise selektives Laserschmelzen (SLM) oder selektives Lasersintern (SLS).

Bei SLS oder SLM wird das Endstück schichtweise aus granularem Material aufgebaut und ein Hohlraum ausgespart. Als granulares Material eignet sich in besonderer Weise Stahl-Pulver. Vorteilhaft wird der schichtweise Aufbau derart durchgeführt, dass das Bauteil Schicht für Schicht gefertigt wird und das granulare Material, das in dem Hohlraum nicht aufgeschmolzen wird, Schicht für Schicht im Hohlraum verbleibt. Das Endstück sowie die Füllung der Hohlräume bestehen somit gemäß einer bevorzugten Ausführungsform aus demselben Material.

Im Folgenden wird die Erfindung anhand der in den Figuren dargestellten Ausführungsbeispiele näher beschrieben und erläutert. Es zeigen:
- FIG 1: eine Ausgestaltung einer Kupplung bestehend aus einem Geberwellenendstück, einem Drehmomentübertragungselement und einem Maschinenwellenendstück zur Anbindung eines Gebers an eine elektrische Maschine,
- FIG 2: eine Ausgestaltung der beiden Endstücke, die mit pulvergefüllten Hohlräumen versehen sind und
- FIG 3: den Ablauf des Herstellungsverfahrens.

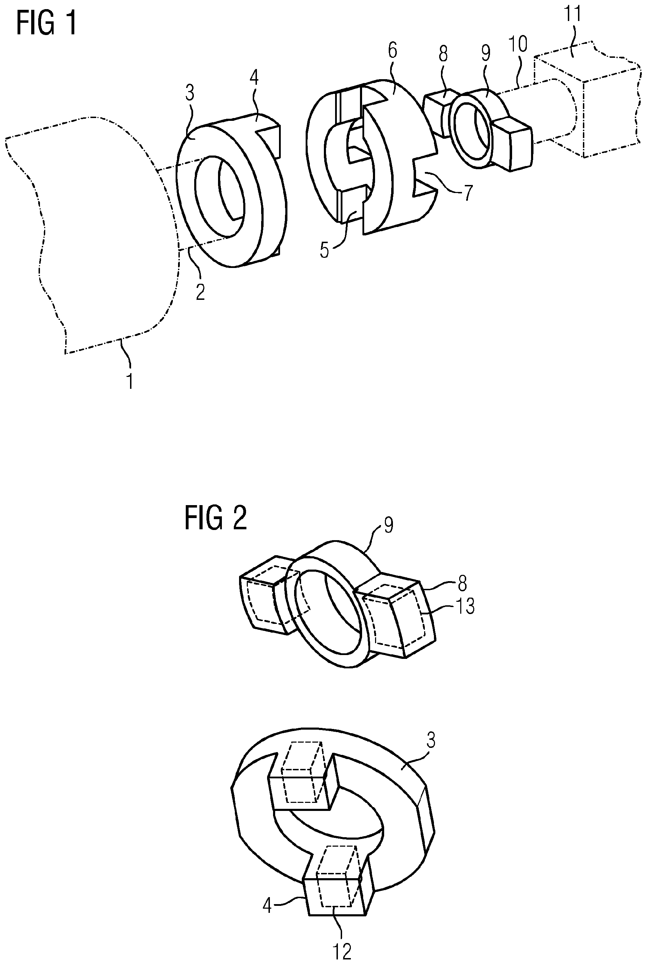

FIG 1 zeigt eine Ausgestaltung einer Kupplung zur Anbindung eines Gebers 11 mit einer Geberwelle 10 an eine elektrische Maschine 1 mit einer Maschinenwelle 2. Die Kupplung umfasst ein Geberwellenendstück 9, ein Maschinenwellenendstück 3 und ein Drehmomentübertragungselement 6. Das Geberwellenendstück 9 verfügt über zwei Mitnehmer 8. Das Maschinenwellenendstück 3 verfügt über zwei Mitnehmer 4. Die Mitnehmer 8 des Geberwellenendstücks 9 werden mit der Nut 7 des Drehmomentübertragungselements 6 gekoppelt, die Mitnehmer 4 des Maschinenwellenendstücks 3 werden mit der Nut 5 des Drehmomentübertragungselements 6 gekoppelt.

FIG 2 zeigt eine Ausgestaltung des Geberwellenendstücks 9 und des Maschinenwellenendstücks 3. Das Geberwellenendstück 9 verfügt über zwei Mitnehmer 8, die jeweils mit einem pulvergefüllten Hohlraum 13 ausgestattet sind. Das Maschinenwellenendstück 3 verfügt über zwei Mitnehmer 4, die jeweils mit einem pulvergefüllten Hohlraum 12 ausgestattet sind.

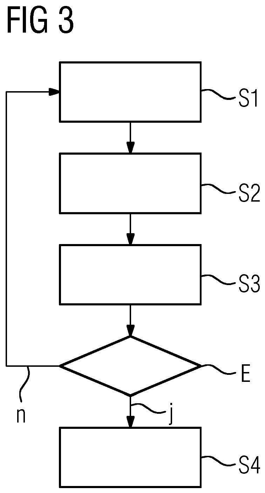

FIG 3 beschreibt den Ablauf des Herstellungsverfahrens. Wie bei einem additiven Fertigungsverfahren üblich bringt eine Rakel beim selektiven Laserschmelzen in einem ersten Verfahrensschritt S1 zunächst eine dünne Schicht granularen Materials, vorzugsweise Stahl-Pulver, auf eine Grundplatte auf. Anschließend wird gemäß der technischen Vorgabe das Pulver mittels Laserstrahlung geschmolzen und bildet nach der Erstarrung eine feste Materialschicht. Pulver, welches nicht aufgeschmolzen wurde, verbleibt in Verfahrensschritt S2 dort und wird nicht ausgeblasen. Anschließend wird in Verfahrensschritt S3 die Grundplatte um den Betrag der Schichtdecke abgesenkt und erneut in Verfahrensschritt S1 Pulver aufgetragen, wenn während der Statusabfrage E festgestellt wird, dass das Bauteil noch nicht fertiggestellt wurde, in FIG 3 mit n gekennzeichnet. Schicht für Schicht werden diese Vorgänge wiederholt. Während des schichtweisen Aufbaus des Endstücks zeichnet sich ein Hohlraum ab, der in Verfahrensschritt S2 nicht ausgeblasen wird. Die Vorgänge werden so lange wiederholt, bis das Endstück in Verfahrensschritt S4 gemäß Vorgabe fertiggestellt ist, in FIG 3 mit j gekennzeichnet. Es entsteht ein Wellenendstück, das über einen Hohlraum verfügt, der mit dem Stahl-Pulver gefüllt ist.

## Patentansprüche

1. Wellenendstück für eine Kupplung zur Anbindung eines Gebers (11) an eine elektrische Maschine (1), wobei die Kupplung
- ein mit einer Geberwelle (10) koppelbares Geberwellenendstück (9) und
- ein mit einer Maschinenwelle (2) koppelbares Maschinenwellenendstück (3) umfasst,
wobei zwischen dem Geberwellenendstück (9) und dem Maschinenwellenendstück (3) mindestens ein Drehmomentübertragungselement (6) angebracht ist,
wobei das Wellenendstück (3, 9) über wenigstens einen Mitnehmer verfügt,
wobei der Mitnehmer (4 ,8) und das Wellenendstück (3, 9) als einstückiges Element ausgebildet sind,
**dadurch gekennzeichnet, dass** der Mitnehmer (4, 8) mindestens einen mit granularem Material gefüllten, vollständig umschlossenen Hohlraum (12, 13) aufweist.

2. Wellenendstück nach Anspruch 1, wobei das Wellenendstück (3, 9) über genau zwei Mitnehmer (4, 8) verfügt.

3. Wellenendstück nach einem der Ansprüche 1 oder 2, wobei jeder Mitnehmer (4, 8) über genau einen mit granularem Material gefüllten Hohlraum (12, 13) verfügt.

4. Wellenendstück nach einem der Ansprüche 1 bis 3, wobei jedes Endstück (3, 9) aus Stahl ausgebildet ist.

5. Wellenendstück nach einem der Ansprüche 1 bis 4, wobei der Hohlraum (12, 13) vollständig mit granularem Material gefüllt ist, insbesondere mit Stahl-Pulver.

6. Wellenendstück nach einem der Ansprüche 1 bis 5, wobei das Wellenendstück als Endstück einer Geber- oder Maschinenwelle (9, 3) ausgeführt ist.

7. Kupplung zur Anbindung eines Gebers (11) an eine elektrische Maschine (1), wobei die Kupplung
- ein mit einer Geberwelle (10) koppelbares Geberwellenendstück (9) und
- ein mit einer Maschinenwelle (2) koppelbares Maschinenwellenendstück (3) umfasst,
wobei zwischen dem Geber- und dem Maschinenwellenendstück (9, 3) mindestens ein Drehmomentübertragungselement (6) angebracht ist, wobei der Mitnehmer (4 ,8) und das Wellenendstück (3, 9) als einstückiges Element ausgebildet sind,
wobei mindestens eines der Wellenendstücke (3, 9) als Wellenendstück (3, 9) nach einem der Ansprüche 1 bis 6 ausgebildet ist.

8. Kupplung nach Anspruch 7, wobei der Mitnehmner (4, 8) mit einer Nut (5, 7) des Drehmomentübertragungselements (6) gekoppelt ist.

9. Kupplung nach einem der Ansprüche 7 oder 8, wobei das Drehmomentübertragungselement (6) aus Kunststoff gefertigt ist.

10. Verfahren zur Herstellung eines Wellenendstücks (3, 9) nach einem der Ansprüche 1 bis 6, bei welchem mindestens ein vollständig umschlossener Hohlraum (12, 13) ausgebildet wird, in welchem granulares Material verbleibt oder hinzugefügt wird.

11. Verfahren nach Anspruch 10, wobei das Wellenendstück (3, 9) mittels additiver Fertigung, vorzugsweise mittels selektivem Laserschmelzen (SLM) oder selektivem Lasersintern (SLS), hergestellt wird.

12. Verfahren nach einem der Ansprüche 10 bis 11, wobei als granulares Material Stahl-Pulver verwendet wird.

13. Verfahren nach einem der Ansprüche 10 bis 12, wobei das Endstück (3, 9) schichtweise aus dem granularen Material aufgebaut wird und der Hohlraum (12, 13) ausgespart wird, wobei der Hohlraum (12, 13) während des schichtweisen Aufbaus schichtweise mit dem granularen Material gefüllt wird.

14. Verwendung einer Kupplung nach Anspruch 7 zur Dämpfung von Schwingungen oder Stößen.

15. Verwendung einer Kupplung nach Anspruch 14, wobei Schwingungsüberhöhungen bei einer Resonanzfrequenz, die insbesondere durch das schwingungsfähige System aus der Kupplung nach einem der Ansprüche 7 bis 9 und der Massenträgheit eines mit der Kupplung verbundenen Gebers (11) verursacht werden, gedämpft werden.

## Claims

1. Shaft end piece for a coupling for connecting an encoder (11) to an electrical machine (1), wherein the coupling comprises
- an encoder shaft end piece (9) which can be coupled to an encoder shaft (10) and
- a machine shaft end piece (3) which can be coupled to a machine shaft (2),
wherein at least one torque transmission element (6) is mounted between the encoder shaft end piece (9) and the machine shaft end piece (3),
wherein the shaft end piece (3, 9) has at least one carrier, wherein the carrier (4, 8) and the shaft end piece (3, 9) are formed as an integral element,
**characterised in that** the carrier (4, 8) has at least one fully enclosed cavity (12, 13) filled with granular material.

2. Shaft end piece according to claim 1, wherein the shaft end piece (3, 9) has exactly two carriers (4, 8).

3. Shaft end piece according to one of claims 1 or 2, wherein each carrier (4, 8) has exactly one cavity (12, 13) filled with granular material.

4. Shaft end piece according to one of claims 1 to 3, wherein each end piece (3, 9) is formed from steel.

5. Shaft end piece according to one of claims 1 to 4, wherein the cavity (12, 13) is completely filled with granular material, in particular with steel powder.

6. Shaft end piece according to in one of claims 1 to 5,
wherein the shaft end piece is embodied as an end piece of an encoder shaft or a machine shaft (9, 3).

7. Coupling for connecting an encoder (11) to an electrical machine (1), wherein the coupling comprises
- an encoder shaft end piece (9) which can be coupled to an encoder shaft (10) and
- a machine shaft end piece (3) which can be coupled to a machine shaft (2),
wherein at least one torque transmission element (6) is mounted between the encoder shaft end piece and the machine shaft end piece (9, 3), wherein the carrier (4, 8) and the shaft end piece (3, 9) are formed as an integral element, wherein at least one of the shaft end pieces (3, 9) is formed as a shaft end piece (3, 9) according to one of claims 1 to 6.

8. Coupling according to in claim 7, wherein the carrier (4, 8) is coupled to a slot (5, 7) of the torque transmission element (6).

9. Coupling according to one of claims 7 or 8, wherein the torque transmission element (6) is made of plastic.

10. Method for producing a shaft end piece (3, 9) according to one of claims 1 to 6, in which at least one completely enclosed cavity (12, 13) is formed, in which granular material remains or is added.

11. Method according to claim 10, wherein the shaft end piece (3, 9) is manufactured by means of additive production, preferably by means of selective laser melting (SLM) or selective laser sintering (SLS).

12. Method according to one of claims 10 to 11, wherein steel powder is used as granular material.

13. Method according to one of claims 10 to 12, wherein the end piece (3, 9) is built up layer by layer from the granular material and the cavity (12, 13) is recessed, wherein the cavity (12, 13) is filled with the granular material during the layered construction.

14. Use of a coupling according to claim 7 for damping vibrations or impacts.

15. Use of a coupling according to claim 14, wherein excess vibration stresses are damped at a resonance frequency which is caused in particular by the oscillating system consisting of the coupling according to one of claims 7 to 9 and the mass inertia of an encoder (11) connected to the coupling.

## Revendications

1. Embout d'arbre d'un accouplement pour la liaison d'un capteur (11) à une machine (1) électrique, dans lequel l'accouplement comprend
- un embout (9) de capteur pouvant être accouplé à un arbre (10) de capteur et
- un embout (3) d'arbre de machine pouvant être accouplé à un arbre (2) de machine,
dans lequel au moins un élément (6) de transmission de couple est monté entre l'embout (9) d'arbre du capteur et l'embout (3) d'arbre de la machine,
dans lequel l'embout (3, 9) d'arbre dispose d'au moins un entraîneur,
dans lequel l'entraîneur (4, 8) et l'embout (3, 9) d'arbre sont constitués sous la forme d'un élément d'une seule pièce, **caractérisé en ce que** l'entraîneur (4, 8) a au moins une cavité (12, 13) fermée entièrement et emplie d'au moins un matériau granulaire.

2. Embout d'arbre suivant la revendication 1, dans lequel l'embout (3, 9) d'arbre dispose d'exactement deux entraîneur (4, 8) .

3. Embout d'arbre suivant l'une des revendications 1 ou 2, dans lequel chaque entraîneur (4, 8) dispose exactement d'une cavité (12, 13) emplie de matériau granulaire.

4. Embout d'arbre suivant l'une des revendications 1 à 3, dans lequel chaque embout (3, 9) est en acier.

5. Embout d'arbre suivant l'une des revendications 1 à 4, dans lequel la cavité (12, 13) est emplie entièrement de matériau granulaire, notamment de poudre d'acier.

6. Embout d'arbre suivant l'une des revendications 1 à 5, dans lequel l'embout d'arbre est réalisé sous la forme d'un embout d'un arbre (9, 3) de capteur ou de machine.

7. Accouplement de liaison d'un capteur (11) à une machine (1) électrique, dans lequel l'accouplement comprend
- un embout (9) de capteur pouvant être accouplé à un arbre (10) de capteur et
- un embout (3) d'arbre de machine pouvant être accouplé à un arbre (2) de machine,
dans lequel au moins un élément (6) de transmission de couple est monté entre l'embout (9) d'arbre du capteur et l'embout (3) d'arbre de la machine, dans lequel l'entraîneur (4, 8) et l'embout (3, 9) d'arbre sont constitués sous la forme d'un élément d'une seule pièce,
dans lequel au moins l'un des embouts (3, 9) d'arbre est constitué sous la forme d'un embout (3, 9) d'arbre suivant l'une des revendications 1 à 6.

8. Accouplement suivant la revendication 7, dans lequel l'entraîneur (4, 8) est accouplé à une rainure (5, 7) de l'élément (6) de transmission de couple.

9. Accouplement suivant l'une des revendications 7 ou 8, dans lequel l'élément (6) de transmission de couple est en matière plastique.

10. Procédé de fabrication d'un embout (3, 9) d'arbre suivant l'une des revendications 1 à 6, dans lequel on constitue au moins une cavité (12, 13) fermée complètement, dans laquelle on laisse ou à laquelle on ajoute du matériau granulaire.

11. Procédé suivant la revendication 10, dans lequel l'embout (3, 9) d'arbre au moyen d'une fabrication additive, de préférence au moyen d'une fusion (SLM) laser sélective ou d'un frittage (SLS) laser sélectif.

12. Procédé suivant l'une des revendications 10 ou 11, dans lequel on utilise de la poudre d'acier comme matériau granulaire.

13. Procédé suivant l'une des revendications 10 à 12, dans lequel on forme l'embout (3, 9) couche par couche sur le matériau granulaire et on évide la cavité (12, 13), dans lequel on remplit la cavité (12, 13) couche par couche du matériau granulaire pendant la formation couche par couche.

14. Utilisation d'un accouplement suivant la revendication 7 pour l'amortissement de vibrations ou de chocs.

15. Utilisation d'un accouplement suivant la revendication 14, dans lequel on amortit des surélévations de vibrations à une fréquence de résonnance, qui sont provoquées notamment par le système soumis aux vibrations, composé de l'accouplement suivant l'une des revendications 7 à 9 et de l'inertie de masse d'un capteur (11) relié à l'accouplement.
